# EUROPEAN PATENT APPLICATION

(11) **EP 0 834 616 A1**
(43) Date of publication of application: **08.04.1998**
(21) Application number: 97116943.8
(22) Date of filing: 30.09.1997
(51) Int. Cl.: D21H 17/02, A23K 1/14

(54) **Production of paper containing citrus-fruit residuals**

(30) Priority: 02.10.1996 IT VA960019
(71) Applicant: Geopolimeri S.r.l., 36028 Rossano Veneto, VI (IT)
(72) Inventor: Nicolucci, Clemente, 36028 Rossano Veneto VI (IT); Monegato, Achille, 36028 Rossano Veneto VI (IT)

(57) **Abstract**

A process is disclosed which allows the transformation of agricultural-food industry wastes, particularly of citrus-fruit processing residuals, in solid products suitable for the production of a pleasant smelling paper specially suitable as food, useful in the package of animal foods.

## Description

The present invention refers to the use of agricultural-food industry wastes, with particular reference to citrus-fruit processing residuals for making paper.

The term "citrus fruits" mainly refers to lemons, oranges, mandarin oranges, grapefruit and bergamot pears. The following description refers particularly to paper but the process described is equally useful for producing paper and board, which are therefore included in the scope of this invention.

For many years the Applicant has been working in the field of natural-material waste used for making paper and boards, and by proceeding with their own studies and experiments has managed to prepare a process for obtaining scented paper having a lower density than paper normally produced, and which uses the solid-waste residuals resulting from the production of citrus fruit juices.

The main problem encountered when treating agricultural wastes for the abovementioned purposes is that the basic characteristics of the products used, and in particular the organoleptic characteristics, are lost because those parts of the product affecting their chemical-physical characteristics are removed or modified.

Recently, the inventors have prepared a paper-making process foreseeing the use of depleted sugar-beet pulp. This sugar pulp-production by-product is used in paper in its integral form, as described in European patent application N.644293.

Continuing in research for the potential use of low-cost materials for paper-making, and especially waste materials from other industrial and agricultural productions, the use of citrus-fruit processing residuals to partly of fully replace mineral fillers normally put in the paper, and even replacing part of the actual wood-pulp, was appraised.

The Applicant found that flours obtained from citrus-fruit residuals can be used even without resorting to treatment with insolubilizers and/or coagulants, and that gradual and correct drying preserves a pleasant smell/aroma in the paper. According to the present invention, the process produces preservable organic flour useful for making paper, both in the pulp and in size press coating.

It is known that the residuals deriving from soft-drink production processes constitute a problem because of their difficult elimination and very limited reutilization.

The industry using citrus fruits for making juices, essences, pectin and dyes is very complex.

The processing can be schematically described in the following points:
1. Juice extraction: generally, these are industrial operations carried out by hot or cold squeezing of citrus fruits to obtain fruit juices and concentrates;
2. Extraction of oils, essences, scents and dyes: an operation using the fruit-extraction residuals or the citrus fruits directly. Solvents are used to extract the active elements from the biomass. These are then purified and used in many sectors, such as the food industry, cosmetics industry and others;
3. Pectin extraction: the pectin is generally extracted with acid solutions and is widely used in the food or animal-feed industries;
4. The formation of an industrial waste, resulting from the previously-described operations, that can be partly used as an animal-feed supplement.

Subsequently, use of this waste for making paper having particular organoleptic characteristics making its use in the animal-feed packing sector and enabling the same packing to be reused as a food supplement, was studied.

Especially useful for paper-making were found to be vegetable substances made up of the wastes or residuals from several agricultural-food processes consequential to the production of fresh juices and drinks based on lemons, oranges, mandarins, grapefruit and bergamot. Particularly interesting were the residuals resulting from the extraction of pectins, called "mash", and fruit residuals in general, such as peels.

It has now been found, and this constitutes a fundamental aspect of the present invention, that citrus-fruit processing residuals can be used to produce flours which retain both the smell of the citrus fruit from which they come in addition to the original chemical composition of the waste utilized.

Because the flours obtained according to the process described in the present invention have a lower apparent specific weight than the wood-pulp with which they are mixed to produce the paper, this offers a further advantage by considerably reducing the density of the paper produced.

A further advantage of flours obtained according to the present invention lies in the fact that the paper containing these can be used to make packings which can be eaten, together with the contents, by animals.

According to a fundamental aspect of the process in the present invention
a) the citrus fruit residuals used to produce drinks are dried at a temperature of below 200°C for less than 60 minutes, until their water content is reduced to a value of less than 20% in weight;
b) the dried residuals are ground with micronizing mills converting them into a powdery flour having dimensions of between 1 and 300 microns;
c) this flour is added to the cellulose suspension to be converted into paper in quantities of from 1% to 50% in weight with respect to the cellulose.

In the preferred forms of realizing the process according to the invention, the drying temperature used is preferably below 150° and the drying time less than 30 minutes.

Micronizing mills and the technologies commonly used to produce flours for food use are used for drying.

The flours obtained can be pre-sifted with filters of 50/100 mesh per linear inch to obtain a product directly usable as pulp filler in paper making.

Sifting the same with nets of mesh 150/250 per linear inch, will separate a part of flours usable also on paper and board surfaces for their coating and/or pigmenting (surface applications). These residuals must be dried quickly in order to prevent phenomena of biodegradation with subsequent emission of bad-smelling volatiles.

The addition of vegetable substances still containing traces of aromas and natural essences to the pulp used for making paper allows us to obtain a scented paper retaining part of the original smell.

The pleasant aroma/smell of the paper thus obtained constitutes a particular commercial and/or ecological value. A very important characteristic of the flours obtained is their poor solubility in water, because they come from industrial operations taking place in water and which have already extracted the soluble matter that could be released in the water.

This characteristic is particularly useful in the paper-making process, because it limits the level of releasing solubles in the paper mill's process waters.

The product used does not jeopardize the production process and the qualities of paper obtained, it does not increase water purification treatment costs and does not require particular technological variations in the paper-making process.Lastly, the product used does not undergo significant reductions in yield consequential to the loss of colloids and salts in the process waters.

These flours typically have a level of less than 1% in solubles releasable in the process waters.

To guarantee insolubility of the flours according to the invention, it is in any case advantageous to use coagulants such as aluminium polychloride and/or aluminium sulfate, in the ways and quantities normally used in clarification of the process waters.

Even the use of cationic retentives, such as cationic starch and/or resins and cationic polymers, helps control and maintain solubles in the process waters at the desired levels.

To guarantee good insolubility in water, these integral vegetable flours can therefore be premixed with quantities, typically from 0.1% to 30% in weight of colloids or binders or their mixtures which reduce the water solubility of their components to values of below 0.5%.

The use of inorganic materials as filler or as coat in the paper-making industry is very widespread and mainly concerns kaolin and calcium carbonate.

These minerals are extracted from quarries and mines, with subsequent problems to the environment and landscape, in addition to being their non-renewable raw materials.

The replacing of minerals or part of these with surplus organic industrial residuals prevents the dumping of these biomasses.

Also, the papers obtained using the flours as fillers, according to the present invention, are lighter and, with equal thickness and use, allow considerable saving in raw materials.

The mineral fillers used in the paper-making sector have a specific weight of between 2.0 and 3.0 kg/dm3, whereas the flours according to the present invention have a specific weight of between 1.4 and 1.8 kg/dm3.

After micronizing, these organic fillers have apparent specific weights of between 0.2 and 0.5 kg/dm3 depending on the average granulometry obtained, which are clearly lower than those of the inorganic fillers they replace.

Replacing 20% of mineral filler with 20% micronized citrus-fruit flour can offer a paper weight saving of 10% (hence also of the relative wood-pulp) with equal service carried out by the paper or board thus produced.

These papers have a higher energy value than normal papers obtained with traditional inorganic fillers: the higher the degree of replacement with these new organic fillers the higher the value. Another important characteristic is offered by the increased biodegradability of the paper, which is much higher than the replacement percentage of organic fillers, compared to inorganic fillers.

The presence of organic biomass coming from the agricultural-food industrial processes allows us to consider final uses in addition to recycling of the paper product obtained.

A paper where the inorganic filler has been replaced by a flour filler as foreseen in this invention can be used in the livestock industry to partly replace, from 1% to 30% in weight, traditional feeds, and as a source of cellulose for animal feed because it is easier to digest than other papers containing minerals.

Also, these papers can be used for food packaging, and especially with citrus-fruit by-products, as containers for squeezed-fruit juices, fruit drinks and for the fruit itself.

Another use for these papers, due to their better biodegradability with respect to traditional papers, is in agriculture, for making vessels and containers for vegetables and plants, because these objects are directly absorbed and biodegraded in the soil.

The operation of replacing inorganic fillers with organic fillers is very important both from an economical standpoint and for the environmental saving of non-renewable raw materials.

To illustrate the characteristics of the paper and the process according to this invention, several forms of realizing the same and the products thus obtained will be given.

### EXAMPLE 1

Paper intended for printing and writing, produced with lemon residuals.

100 kg of lemon residuals are ground in a micronizing mill and reduced to average dimensions of 50 microns (ranging from 1 to 200 microns), with an apparent specific weight of 0.4 kg/dm3 and an ash content (525°C) of 5%. A mixture made up of 750 kg bleached chemical pulp (150 kg long fibre and 600 kg short fibre), 100 kg previously micronized lemon residuals having the abovementioned characteristics and 150 kg of calcium carbonate was put into a paper machine having an output of approximately 700 kg. per hour.

The lemon residuals were previously treated with 2% aluminiun polychloride to make them less soluble.

Add 0.9% diketenetic-type synthetic bonding agent to the pulp to make the paper suitable for writing with watery inks, and add 1% cationic starch and 1% aluminium polychloride to improve retention and drainage. A mixture of potato flour (4.6 % in weight of loaded product) was used in a size press to improve stiffness, appearance and printability of the paper obtained. The web delivery speed was adjusted to 70 metres per minute. The paper machine was automatically controlled by an Accuray 1180 Micro Plus system for substance, moisture, thickness. The paper obtained (800 kg net of scraps and delivery) has a grammage of approx. 90 g/m2, a characteristic ivory aspect, and characteristic speckling. It is perfectly writable, photocopiable and printable. It retains a pleasant smell. Table 2 gives the main characteristics of the paper obtained compared with paper produced under the same operative conditions, with the same additives (bonding agents and starch) but without lemon residuals.

### EXAMPLE 2

Paper intended for printing and writing, produced with orange residuals.

100 kg of orange residuals are ground in a micronizing mill and reduced to average dimensions of 50 microns (ranging from 1 and 200 microns), with an apparent specific weight of 0.4 kg/dm3 and an ash content (525°C) of 7%. Put a mixture made up of 750 kg bleached chemical pulp (150 kg long fibre and 600 kg short fibre), 100 kg previously micronized orange residuals having the above mentioned characteristics and 150 kg of calcium carbonate in a paper machine having an output of about 700 kg. per hour.

The orange residuals were previously treated with 2% aluminiun polychloride to make them less soluble.

Add 0.9% diketenetic-type synthetic bonding agent to the pulp to make the paper suitable for writing with watery inks, and add 1% cationic starch and 1% aluminium polychloride to improve retention and drainage. A mixture of potato flour (4.6 % in weight of loaded product) was used in a size press to improve stiffness, appearance and printability of the paper obtained. The web delivery speed was adjusted to 70 metres per minute. The paper machine was automatically controlled by an Accuray 1180 Micro Plus system for substance, moisture, thickness. The paper obtained (750 kg net of scraps and delivery); has a grammage of approx. 90 g/m2, a characteristic ivory aspect, and characteristic speckling. It is perfectly writable, photocopiable and printable. It retains a pleasant smell. Table 2 gives the main characteristics of the paper obtained compared with paper produced under the same operative conditions, with the same additives (bonding agents and starch) but without orange residuals.

### EXAMPLE 3

Paper intended for printing and writing, produced with grapefruit residuals.

100 kg of grapefruit residuals are ground in a micronizing mill and reduced to average dimensions of 50 microns (ranging from 1 and 200 microns), with an apparent specific weight of 0.5 kg/dm3 and ash content (525°C) of 5%. Put a mixture made up of 750 kg bleached chemical pulp (150 kg long fibre and 600 kg short fibre), 100 kg previously micronized grapefruit residuals having the abovementioned characteristics and 150 kg of calcium carbonate in a paper machine having an output of approximately 700 kg. per hour. The grapefruit residuals were previously treated with 2% aluminiun polychloride to make them less soluble.

Add 0.9% diketenetic-type synthetic bonding agent to the pulp to make the paper suitable for writing with watery inks, and add 1% cationic starch and 1% aluminium polychloride to improve retention and drainage. A mixture of potato flour (4.6 % in weight of loaded product) was used in a size press to improve stiffness, appearance and printability of the paper obtained. The web delivery speed was adjusted to 70 metres per minute. The paper machine was automatically controlled by an Accuray 1180 Micro Plus system for substance, moisture, thickness. The paper obtained (800 kg net of scraps and delivery) has a grammage of approximately 90 g/m2, a characteristic ivory aspect, and characteristic speckling. It is perfectly writable, photocopiable and printable. It retains a pleasant smell. Table 2 gives the main characteristics of the paper obtained compared with paper produced under the same operative conditions, with the same additives (bonding agents and starch) but without grapefruit residuals.

### EXAMPLE 4

Paper intended for printing and writing, produced with lemon residuals and the addition of lemon essence.

100 kg of lemon residuals are ground in a micronizing mill and reduced to average dimensions of 50 microns (ranging from 1 and 200 microns), with an apparent specific weight of 0.4 kg/dm3 and ash content (525°C) of 5%. Put a mixture made up of 750 kg bleached chemical pulp (150 kg long fibre and 600 kg short fibre), 100 kg previously micronized lemon residuals having the abovementioned characteristics and 150 kg of calcium carbonate in a paper machine having an output of approximately 700 kg. per hour. The lemon residuals were previously treated with 2% aluminiun polychloride to make them less soluble. 2 kg. of lemon essence were absorbed in 20 kg. of micronized diatom powder and added to the previously treated lemon residual. Add 0.9% diketenetic-type synthetic bonding agent to the pulp to make the paper suitable for writing with watery inks, and add1% cationic starch and 1% aluminium polychloride to improve retention and drainage. A mixture of potato flour (4.5 % in weight of loaded product) was used in a size press to improve stiffness, appearance and printability of the paper obtained. The web delivery speed was adjusted to 70 metres per minute. The paper machine was automatically controlled by an Accuray 1180 Micro Plus system for substance, moisture, thickness. The paper obtained (750 kg net of scraps and delivery has a grammage of approx. 90 g/m2, a characteristic ivory aspect, and characteristic speckling. It is perfectly writable, photocopiable and printable. It retains a pleasant smell. Table 2 gives the main characteristics of the paper obtained compared with paper produced under the same operative conditions, with the same additives (bonding agents and starch) but without lemon residuals.

### EXAMPLE 5

Paper produced with lemon residuals and intended for cattle-feed testing.

100 kg of lemon residuals are ground in a micronizing mill and reduced to average dimensions of 100 microns (ranging from 10 and 300 microns), with an apparent specific weight of 0.6 kg/dm3 and ash content (525°C)of 5%. Put a mixture made up of 500 kg bleached chemical pulp (100 kg long fibre and 400 kg short fibre) and 100 kg previously micronized lemon residuals having the abovementioned characteristics, in a paper machine having an output of approximately 700 kg. per hour. Add 0.5% diketenetic-type synthetic bonding agent to the pulp to make the paper suitable for writing with watery inks, and add 0.9% cationic starch to improve retention and drainage. The web delivery speed was adjusted to 40 metres per minute. The paper machine was automatically controlled by an Accuray 1180 Micro Plus system for substance, moisture, thickness. A mixture of potato flour (3.1 % in weight of loaded product) and casein (3.8% in weight on loaded product) was used in a size press to improve stiffness, appearance and printability of the card obtained. The paper obtained (400 kg net of scraps and delivery) has a grammage of approx. 200 g/m2, an ivory aspect, and marked speckling. This paper is intended for animal-feed tests, after being used as packing for food products (boxes containing citrus fruits). Table 2 gives the main characteristics of the card obtained.

### EXAMPLE 6

Paper produced with lemon residuals and intended for testing for use as seed and plant containers. 100 kg of lemon residuals are ground in a micronizing mill and reduced to average dimensions of 100 microns (with a space of from 10 and 300 microns), with an apparent specific weight of 0.6 kg/dm3 and an ash content (525°C) of 5%. Put a mixture made up of 500 kg bleached chemical pulp (100 kg long fibre and 400 kg short fibre) and 100 kg previously micronized lemon residuals having the abovementioned characteristics, and 100 kg of calcium carbonate in a paper machine having an output of approximately 700 kg. per hour. Add 1.3% diketenetic-type synthetic bonding agent to the pulp to make the paper suitable for printing, and add 0.8% cationic starch to improve retention and drainage. The web delivery speed was adjusted to 40 metres per minute. The paper machine was automatically controlled by an Accuray 1180 Micro Plus system for substance, moisture, thickness. A mixture of potato flour (5.0 % in weight of loaded product) was used in a size press to improve stiffness and aspect of the card obtained and a urea-formaldehyde resin (5.0% in weight of loaded product) to give the necessary characteristics of moisture resistance (given as the ratio of moist breaking length and dry breaking length). The paper obtained (400 kg net of scraps and delivery) has a grammage of approx. 90 g/m2, an ivory aspect, and marked speckling. This paper is intended for use as containers for holding vegetables to be planted in the soil. Table 2 gives the main characteristics of the papers obtained compared with paper produced under the same operative conditions and using traditional calcium carbonate.

**TABLE 1**

| **Pulp of tests carried out.** | | | | | | | | |
|---|---|---|---|---|---|---|---|---|
| **DESCRIPTION** | **Unit** | **Ref.** | **Ex. 1** | **Ex.2** | **Ex. 3** | **Ex.4** | **Ex. 5** | **Ex. 6** |
| Bleached chemical pulp | Kg. | 750 | 750 | 750 | 750 | 750 | 500 | 500 |
| | % | 69,4 | 69,4 | 69,4 | 69,4 | 67,9 | 76,4 | 62,7 |
| Calcium Carbonate | Kg. | 250 | 150 | 150 | 150 | 150 | = | 100 |
| | % | 23,2 | 13,9 | 13,9 | 13,9 | 13,6 | = | 12,6 |
| Citrus-fruit flour | Kg. | = | 100 | 100 | 100 | 100 | 100 | 100 |
| | % | = | 9,2 | 9,2 | 9,2 | 9,1 | 15,3 | 12,6 |
| Bonding agent (AKD) | Kg. | 10 | 10 | 10 | 10 | 10 | 3 | 10 |
| | % | 0,9 | 0,9 | 0,9 | 0,9 | 0,9 | 0,5 | 1,3 |
| Retentives and coagulants | Kg. | 20 | 22 | 22 | 22 | 22 | 6 | 6 |
| | % | 1,9 | 2,0 | 2,0 | 2,0 | 2,0 | 0,9 | 0,8 |
| Lemon essence | Kg. | = | = | = | = | 2 | = | = |
| | % | = | = | = | = | 0,2 | = | = |
| Diatoms | Kg. | = | = | = | = | 20 | = | = |
| | % | = | = | = | = | 1,8 | = | = |
| Surface starch | Kg. | 50 | 50 | 50 | 50 | 50 | 20 | 40 |
| | % | 4,6 | 4,6 | 4,6 | 4,6 | 4,5 | 3,1 | 5,0 |
| Casein in | Kg. | = | = | = | = | = | 25 | = |
| | % | = | = | = | = | = | 3,8 | = |
| moistureproof resin on surface (ureaformadelhy de) | Kg. | = | = | = | = | = | = | 40 |
| | % | = | = | = | = | = | = | 5,0 |
| TOTAL | Kg. | 1080 | 1082 | 1082 | 1082 | 1104 | 654 | 796 |
| | % | 100 | 100 | 100 | 100 | 100 | 100 | 100 |

**TABLE 2**

| **Characteristics of papers obtained** | | | | | | | | |
|---|---|---|---|---|---|---|---|---|
| **DESCRIPTION** | **Unit** | **Ref.** | **Ex. 1** | **Ex.2** | **Ex. 3** | **Ex.4** | **Ex. 5** | **Ex. 6** |
| Grammage | g/m² | 90 | 90 | 90 | 90 | 90 | 200 | 200 |
| Thickness | micron | 104 | 114 | 113 | 114 | 116 | 336 | 286 |
| Bulk | dm³/kg | 1,16 | 1,27 | 1,28 | 1,27 | 1,29 | 1,68 | 1,42 |
| Ash (525°C) | % | 21 | 15 | 15 | 15 | 17 | 4 | 14 |
| Ink flotation (Pelikan 4001) | min | >5 | >5 | >5 | >5 | >5 | >3 | >10 |
| Cobb (60 sec) | g/m² | 30 | 32 | 31 | 32 | 35 | 120 | 40 |
| Smoothness (Gurley 100 ml) | sec | 180 | 150 | 160 | 150 | 150 | 70 | 100 |
| Air permeability (Gurley 100 ml) | sec | 25 | 30 | 29 | 30 | 26 | 70 | 40 |
| Dennison waxes | N | 16-18 | 14-16 | 14-18 | 14-18 | 12-16 | 10-14 | 14-18 |
| Breaking lenght long./cross | Km | 4,5 | 5,1 | 5,3 | 5,1 | 4,8 | 4,0 | 4,9 |
| | | 3,0 | 3 0 | 3,1 | 2 9 | 2,8 | 2,8 | 2,9 |
| Dust-free index (400 sheets) | | 0,7 | 1,1 | 1,2 | 1,2 | 1,5 | 3,5 | 2,0 |
| Wet breaking | % | = | = | = | = | = | = | 33 |
| Absolute humidity | % | 6,8 | 6,9 | 6,8 | 7,0 | 6,9 | 7,1 | 7,1 |

## Claims

1. Process for making scented paper containing residuals of citrus-fruit processing, whereby:
a) the residuals of citrus fruits used to produce drinks are dried at a temperature of below 200°C for less than 60 minutes, until their water-content is reduced to a value of less than 20% in weight;
b) the dried residuals are ground with micronizing mills converting them into a powdery flour of dimensions from 1 to 300 microns;
c) this flour is added to the cellulose suspension to be converted into paper in quantities of 1% to 50% in weight with respect to the cellulose.

2. Process as per claim 1. whereby the citrus-fruit residuals used in stage a) are dried at a temperature of below 150°C for less than 30 minutes.

3. Process as per claim 1. whereby the powdery flours of stage b) are pre-sifted with filters of mesh 50/100 per linear inch to obtain a product directly usable as pulp filler in paper making.

4. Process as per claim 1. whereby the powdery flours of stage b) are pre-sifted with filters of mesh 150/200 per linear inch to obtain a product usable on the paper surfaces for their coating and/or pigmenting.

5. Process as per claim 1. whereby the powdery flours of stage b), possibly added with from 0.1% to 30% in weight of coagulants, colloids or bonding agents, contain less than 0.5% in weight of solubles releasable in the process waters.

6. Process as per claim 5., whereby aluminium chloride, aluminium sulfate, cationic starch, cationic polymers and resins are used alone or in mixture as coagulants, colloids or bonding agents.

7. Animal feed, characterized by the fact of containing 1% to 30% in weight of paper produced, as per claims 1 to 6.
